# EUROPEAN PATENT APPLICATION

(11) **EP 2 482 513 A1**
(43) Date of publication of application: **01.08.2012**
(21) Application number: 09849642.5
(22) Date of filing: 23.09.2009
(51) Int. Cl.: H04L 29/06

(54) **METHOD AND DEVICE FOR PROVIDING MULTICAST SERVICE IN A COMMUNICATION SYSTEM**

(71) Applicant: Alcatel Lucent, 75007 Paris (FR)
(72) Inventor: CHAO, Hua, Shanghai 201206 (CN); WANG, He, Shanghai 201206 (CN); HU, Zhongji, Shanghai 201206 (CN)
(74) Representative: 2SPL Patentanwälte
(86) International application number: PCT/CN2009/001071
(87) International publication number: WO 2011/035454

(57) **Abstract**

A method for providing a multicast service in a communication system and an apparatus for implementing the method are provided in the present invention. The communication system comprises at least one user equipment and a server for providing a service to the at least one user equipment. The method comprises steps of: determining, by the server, an MBMS multicast group to provide a multicast service; transmitting, by the server, MBMS service control information required to provide an MBMS service to user equipments within the MBMS multicast group, to a BM-SC in an e-MBMS network; determining, by the BM-SC, an MBMS service area and triggering in the MBMS service area an MBMS bearer setup procedure for user equipments within the MBMS multicast group, based on the received MBMS service control information; forwarding, by the server, data to provide a service to the BM-SC; and distributing, by the BM-SC, the data to each of the user equipments within the MBMS multicast group, via the set up MBMS bearer. The method according to the present invention enables to perform multicast within an MBMS multicast group in case that the multicast is not supported by a radio network.

## Description

### FIELD OF THE INVENTION

The present invention relates to providing a multicast service, and more specifically to an apparatus and method for proving a multicast service in a communication system using an LTE-MBMS network.

### BACKGROUND OF THE INVENTION

3GPP started a 3G Long Term Evolution LTE research project in 2005 to provide a better support to growing demands of operators and users by evolved access technology (E-UTRA, Evolved-UTRA) and access network (E-UTRAN).

Currently, most operators are considering using multimedia multicast technology to support public safety. For example, some operators require the LTE to support some special scenarios, in particular, the following:

Scenario 1: in an IP Multimedia Subsystem (IMS) [Reference Document 1] system, there appears a push to talk group of greater than 20 users (especially a push to talk group desired to support up to 100-200 users). For example, in an emergency situation that more than 20 users enter into an area covered by a single cell, it would be more efficient to broadcast rather than set up multiple unicast paths, although voice transmission requires a low bandwidth, while there is sufficient bandwidth in LTE.

Scenario 2: video sharing application in a dedicated network: when a single (or combined) video segment (e.g. video from a helicopter following a suspect or real time video from several fire trucks at a fire spot) is sent to multiple handsets/devices simultaneously, broadcasting would minimize required resources of air interface and some others.

For the above scenarios, it is beneficial to introduce the multicast function of a Multimedia Broadcast Multicast Service (MBMS). On one hand, the multicast function enables sharing downlink resources for transmitting the same content, and therefore it is economical. On the other hand, if multiple unicast sessions are established, the control plane function (e.g. paging) may become a bottleneck when the group size becomes large.

The standardization of LTE MBMS (REL9) (i.e., e-MBMS) is ongoing and 3GPP assumes no multicast service at present [Reference Document 2]. Thus, the present invention focuses on providing an architecture design and a whole solution by making least modifications to the existing standard so as to provide the multicast function to the above scenarios.

Reference Documents:

[Reference Document 1] : 3GPP TS 23.228, IP Multimedia Subsystems, 2005

[Reference Document 2] : 3GPP TS 23.246 v.910

### SUMMARY OF THE INVENTION

It is an object of the present invention to provide an apparatus and method to support an operator's requirement for providing a multicast service in a communication system.

According to the first solution of the present invention, there is provided a method for providing a multicast service in a communication system, the communication system including at least one user equipment and a server for providing a service to the at least one user equipment, the method comprising steps of: determining, by the server, a Multimedia Broadcast Multicast Service MBMS multicast group to provide a multicast service; transmitting, by the server, MBMS service control information required to provide an MBMS service to user equipments within the MBMS multicast group, to a Broadcast Multicast Service Centre BM-SC in an evolved Multimedia Broadcast Multicast Service e-MBMS network; determining, by the BM-SC, an MBMS service area and triggering in the MBMS service area an MBMS bearer setup procedure for user equipments within the MBMS multicast group, based on the received MBMS service control information; forwarding, by the server, data to provide a service to the BM-SC; and distributing, by the BM-SC, the data to each of the user equipments within the MBMS multicast group, via the set up MBMS bearer.

Preferably, after the BM-SC receives the MBMS service control information from the server, the user equipments within the MBMS multicast group or the e-MBMS network trigger an MBMS discovery procedure for all user equipments within the multicast group, and trigger an MBMS key distribution procedure between all of the user equipments within the multicast group and the BM-SC.

Preferably, before the step of determining, by the server, a Multimedia Broadcast Multicast Service MBMS multicast group to provide a multicast service, further comprising a step of: setting up a bearer for the service between the at least one user equipment and the server.

Preferably, after setting up a bearer for the service between the at least one user equipment and the server, the method further comprises a step of: feeding back, by the at least one user equipment, the information related to MBMS capability of the at least one user equipment to the server via the bearer, wherein the server determines that the MBMS multicast group includes all user equipments having the MBMS capability.

Preferably, for the user equipments without the MBMS capability, the server transmits to them data for the service to be provided, via the bearer.

Preferably, the received MBMS service control information includes location information of each of the user equipments within the MBMS multicast group, and the BM-SC converts the received location information to determine the MBMS service area.

Preferably, the location information is fed back to the server by each of the user equipments within the MBMS multicast group, or is obtained by accessing a server storing the location information of each of the user equipments.

Preferably, after the location information is changed, the method further comprises steps of: forwarding, by the server, updated MBMS service control information to the BM-SC; and re-determining, by the BM-SC, the MBMS service area and triggering an MBMS bearer setup procedure, based on the updated MBMS service control information.

Preferably, the method further comprises steps of: transmitting, by the server, a service termination indicator to the BM-SC; and stopping, by the BM-SC, the service and releasing the set up MBMS bearer.

Preferably, the data to provide a service is received by the server from a user equipment of the at least one user equipment via the bearer.

Preferably, the communication system is one of an IP Multimedia Subsystem IMS system and a dedicated network.

According to the second solution of the present invention, there is provided a Broadcast Multicast Service Centre BM-SC, comprising: a control information receiving module configured to receive, from a server, MBMS service control information required to provide an MBMS service to user equipments within a Multimedia Broadcast Multicast Service MBMS multicast group; an MBMS bearer setting-up module configured to, based on the received MBMS service control information, determine an MBMS service area, and to trigger in the MBMS service area an MBMS bearer setup procedure for user equipments within the MBMS multicast group; an MBMS service data receiving module configured to receive from a server data for the service to be provided; and an MBMS service providing module configured to distribute data to user equipments within the MBMS multicast group via the set up MBMS bearer.

Preferably, the MBMS service control information received by the control information receiving module from the server comprises: location information of the user equipments within the MBMS multicast group, and the MBMS bearer setting-up module comprises: a control information converting module configured to convert the location information to determine the MBMS service area.

Preferably, when the control information receiving module receives updated MBMS service control information, the MBMS bearer setting-up module re-determines the MBMS service area and triggers the MBMS bearer setup procedure based on the updated MBMS service control information.

Preferably, when the control information receiving module receives a service termination indicator, the MBMS service providing module stops the service and the MBMS bearer setting-up module releases the set up MBMS bearer.

According to the third solution of the present invention, there is provided a server, comprising: an MBMS multicast group determining module configured to determine an MBMS multicast group; a control information transmitting module configured to transmit MBMS service control information required to provide an MBMS service to user equipments within a Multimedia Broadcast Multicast Service MBMS multicast group, to a Broadcast Multicast Service Centre BM-SC in an evolved Multimedia Broadcast Multicast Service e-MBMS network; and a service data transmitting module configured to transmit to the BM-SC data for the service to be provided.

Preferably, the server further comprises: an MBMS capability information receiving module configured to receive, from an user equipment within the MBMS multicast group, information related to MBMS capability of the user equipment; and the MBMS multicast group determining module determines that the MBMS multicast group comprises all user equipments having the MBMS capability.

Preferably, the MBMS service control information comprises location information of the user equipments within the MBMS multicast group; and the location information is fed back by user equipments within the MBMS multicast group to the apparatus, or is obtained by accessing a server storing the location information of user equipments.

Preferably, when the location information is changed, the control information transmitting module transmits updated MBMS service control information to the BM-SC.

Beneficial effects achieved by the present invention:

The present invention enables to perform multicast within the MBMS multicast group possible in case that the multicast is not supported in the radio network. Especially, it provides an apparatus and method to meet requirements of operators' application scenarios.

Two key problems are solved in the present invention. One is to introduce uplink user data as a multicast source, and the other is to distribute contents within "a multicast group".

The present invention further introduces proper trigger time for the MBMS service discovery procedure and MBMS security procedure, i.e. after BM-SC obtains the IP multicast address. The two procedures make only user equipments within the multicast group can decode the service data in the control plane and the user plane respectively.

For an IMS application scenario, mobility is also considered to make sure that content can always reach the members of the multicast group even though they are moving in the system. IMS CN (core network) obtains the latest location information of a user equipment by using a feedback from the user equipment or by accessing a server storing location information of the user equipment, and transmits the latest location information of the user equipment to the BM-SC which converts the new location information to a new service area. As such, an MBMS session update procedure will be triggered.

### BRIEF DESCRIPTION OF THE DRAWINGS

The above and other objects, features and advantages of the present invention will become clearer by making references to the following detailed description of nonrestrictive embodiments of the present invention in conjunction with the accompanying drawings, in which:

FIG 1 illustrates the general architecture of an apparatus for providing a multicast service in a communication system for Scenario 1, according to embodiments of the present invention;

FIG 2 illustrates the general architecture of an apparatus for providing a multicast service in a communication system for Scenario 2, according to embodiments of the present invention;

FIG 3 is a diagram illustrating respective steps of a method for providing a multicast service in a communication system, according to embodiments of the present invention;

FIG 4 illustrates a structure diagram of an apparatus for providing a multicast service in a communication system according to embodiments of the present invention;

FIG 5 illustrates a signal flow diagram of a method for providing a downlink multicast service to an IMS system in an LTE MBMS system according to a first embodiment of the present invention.

### DETAILED DESCRIPTION OF EMBODIMENTS

Embodiments of the present invention are now described in detail with reference to the accompanying drawings. In the following descriptions, some specific embodiments are only used for description purposes and they shall not be construed as any limitation on the present invention, but merely examples of the present invention. It needs to be pointed out that the schematic diagrams only illustrate differences from existing systems while omit conventional structures or compositions to avoid a vague understanding of the present invention.

To achieve the object of providing a multicast service in a communication system (an IMS system or a dedicated network), in general two improvements need to be made. One is to introduce uplink user equipment data as a content source of multicast, and the other is to set up a "multicast group" to distribute contents within the "multicast group".

As seen from the first improvement, the Core Network (CN) of the IMS and the security centre of the dedicated network are taken as a content source of the LTE MBMS system. In the first scenario, the IMS service is supported by MBMS capability, and in the second scenario, the content sources of the MBMS are various dedicated networks (e.g. a dedicated network for a public security department). In the present invention, the dedicated network means a non-public network, especially the network related to the public security, e.g. for a public security department or a fire department.

As seen from the second improvement, the requirements of operators mainly can be divided into two categories. Scenario 1 represents one category, in which user equipments are related to a certain IMS session group, which is dynamically changed. Scenario 2 represents the other category, in which videos are shared within a "dedicated group" (e.g. a public security department).

In summary, this invention provides a method for enabling the e-MBMS system to obtain the content source and a multicast group to be set up in the communication system so as to receive contents from the content source and distribute the same contents to user equipments within the multicast group via the MBMS bearer, thereby providing a multicast function to the communication system.

In the following descriptions, a solution description is given for each improvement.

Solution to Improvement 1: introducing uplink application data as an MBMS content source

Scenario 1:

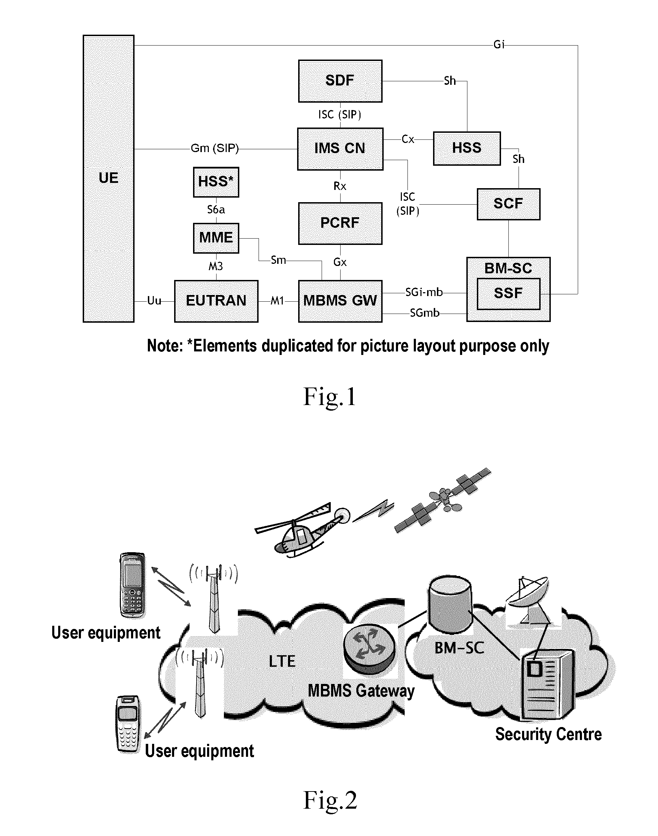

The scenario 1 focuses on the case that a large number of push-to-talk users are located in the same cell. No matter where these users are located, it is always beneficial to use the IP multicast transport bearer of the MBMS service for the IMS system in LTE when the number of users is large. FIG 1 illustrates the general architecture of an apparatus for providing a multicast service in a communication system for Scenario 1, according to embodiments of the present invention.

The present invention uses an interface between CN of the IMS system and a Broadcast Multicast Service Centre (BM-SC) of the e-MBMS system in the architecture. From the user plane point of view, IMS CN acts as a content provider for e-MBMS. IMS CN collects the uplink data from any user equipment who talks and forwards the data to BM-SC as a content source of the MBMS bearer. From the control plane point of view, IMS CN communicates with BM-SC and provides necessary information to make the e-MBMS system know members of the "multicast group".

Other function modules or network components in the architecture are as follows:

- A Service Discovery Function (SDF) module configured to provide an access point to an SSF module for a user equipment (UE) to access to the service provided by a service provider.

- A Service Control Function (SCF) module configured to provide service logic and a function required to support execution of the logic. The SCF module performs service authorization during session initiation and session modification, which includes checking service subscription of the user equipment in order to allow or deny access to the service. The SCF module selects a relevant MBMS media function.

- A Service Selection Function (SSF) module configured to provide an MBMS User Service list and information of relevant User Service Description. A user equipment can retrieve MBMS User Service Description from the SSF module as defined in 3GPP TS 26.346 clause 5.2.

- A Policy and Charging Rules Function (PCRF) module configured to control charging and an establishment of resources in a radio access network and a packet switched core network.

- A Home Subscriber Server (HSS) as defined in 3GPP TS 23.002 contains an IMS User Profile, e.g. a Cell Global Identity (CGI) of a serving cell of the user equipment. The HSS may further include user data of the MBMS User Service.

Scenario 2:

For Scenario 2, two examples are described: a video from a helicopter or that from a fire truck. The two examples are both related to a "dedicated network" for national security. In the "dedicated network", a mechanism should be provided for an authorized user to upload data to the security centre of the dedicated network.

For the first improvement, in order to achieve video sharing, the security centre acts as a content provider for an e-MBMS system. FIG 2 illustrates the general architecture of an apparatus for providing a multicast service in a communication system for Scenario 2, according to embodiments of the present invention.

How to implement uploading is beyond the discussion of the present invention. The network connecting the security centre and the BM-SC can be any Packet Data Network (PDN), e.g. Internet, which is also beyond the discussion of the present invention.

Solution to Improvement 2: setup and management of a multicast group

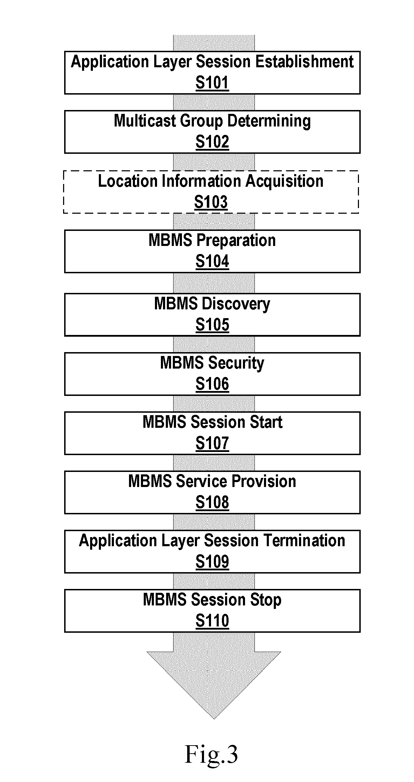

FIG 3 is a diagram illustrating respective steps of a method for providing a multicast service in a communication system, according to embodiments of the present invention.

S101: Application Session Establishment: an application layer session is established in this step. For Scenario 1, an IMS session is initiated by an IMS user equipment, e.g., one push-to-talk session is set up between multiple friends as defined in existing specifications. Authorization of a user is performed according to the user subscription information to check the user's permission of using an MBMS service. For Scenario 2, an authorized user equipment uploads data via an uplink to the security centre so as to share the data. The details are not discussed here.

S102: Multicast Group Determining: for Scenario 1, every IMS user equipment invited by the IMS session feeds back the MBMS capability to the IMS CN thereof via SIP signaling. The party initiating the session also does this kind of feedback. Then, the "multicast group" for bearing the IMS session can be determined, including all IMS user equipments having a MBMS capability and having already accepted IMS session. IMS CN determines to provide an MBMS bearer for the IMS user equipments within the multicast group. Considering that not all the IMS user equipments are equipped with the MBMS capability in an actual system, for the user equipments without the MBMS capability, unicast resources are allocated by the IMS CN. For Scenario 2, the security centre determines the dedicated network type and the dedicated SA scope of the video sharing according to the received content and type of uploaded data, and then determines that the "multicast group" includes all dedicated network user equipments located within the scope of the dedicated SA, each of which has a determined type.

S103, Location Information Acquisition: this step is specific to Scenario 1. In this step, IMS CN collects the location information of each user equipment participating in the IMS session in a cellular network, and transmits the location information to BM-SC. Specifically, the location information may be acquired by the following two manners:

1) User Feedback Based Manner: if accepting an IMS session, each IMS user equipment having the MBMS capability will feed back a Cell Global Identity (CGI) of the serving cell thereof to IMS CN. The party initiating the session also does this kind of feedback, i.e. to feed back the CGI of the serving cell thereof; and

2) Network Database Query Based Manner: in this manner, since IMS CN knows the members of the multicast group, it can query the HSS about the identities and location information of the multicast group members in the cellular network, and can obtain the CGI information or Service Area Identity (SAI) information from the feedback information from the HSS.

S104: MBMS Preparation: this step introduces a new message between a content source (which is the IMS CN for Scenario 1 and the security centre for Scenario 2) and the BM-SC in the control plane to convey control information for multicast group management. For Scenario 1, the IMS CN forwards MBMS control information (IP multicast address and CGI of the serving cell) and the IMS session ID to the BM-SC. Based on the deployment configuration of the system, the BM-SC converts the cell CGI list into a Service Area (SA) list. For Scenario 2, the security centre knows in advance which user equipments are allowed to receive video, and all of such user equipments belong to a multicast group. The security centre of the dedicated network determines in which area of the dedicated network the specific data are shared. The control information conveyed between the security centre and the BM-SC is a dedicated SA list and a security session ID. In addition, the content source further allocates the IP multicast address for the MBMS User Service and transmits it to the BM-SC. This step solves the problem of distributing contents to MBMS users only in the multicast service area.

S105: MBMS Service Discovery: the service discovery step enables the user equipment to know available MBMS services. This step guarantees that only MBMS user equipments in the "multicast group" can be involved into the multicast data transmission, in the application layer and the control plane. For Scenario 1, this step involves the user equipments participating in the IMS session and having the MBMS capability. This step may be implemented by any existing method.

S106: MBMS Security Management: in this step, an MBMS key registration for maintaining the privacy and confidentiality may be based on IMS or other existing manners. This step guarantees that only the MBMS user equipments involved in the multicast group can decode the received data in the user plane. For Scenario 2, the user equipments may have configured a dedicated key in advance, and in this case the MBMS Service Discovery step and the key distribution step can be omitted.

S107: MBMS Session Start: this step performs a Session Start procedure. According to the existing specification, the BM-SC allocates a Temporary Mobile Group Identifier (TMGI) for the MBMS bearer index in the EUTRAN. The BM-SC includes the SA list in the Session Start message, and delivers it to an eNB via the e-MBMS gateway. The eNB sets up the IP multicast transport bearer as defined in the current specification so as to set up an MBMS bearer in the MBMS service area. The MBMS bearer setup procedure is performed as defined in current REL9 specification.

S108: MBMS Service Provision: for Scenario 1, IMS CN receives uplink IMS data and forwards it as the MBMS user service content to the BM-SC. This step includes original MBMS steps including notification and data transfer. Different with current specifications, both the TMGI and the IMS session ID are used as an index for the ongoing MBMS bearer so as to prevent an irrelevant user equipment from receiving the multicast service data. For Scenario 2, the security centre receives the data uploaded by the authorized users and forwards them as the MBMS user service content to the BM-SC.

S109: Application Session Termination: for Scenario 1, the IMS session is terminated by all the user equipments. After receiving the termination information, the IMS CN forwards this status to the BM-SC. For Scenario 2, the security centre determines when to stop all sessions and forwards this status to the BM-SC.

S110: MBMS Session Stop: upon receiving the ending application indicator, the BM-SC starts the MBMS session stop procedure and releases MBMS resources in this step.

It should be noted that the push to talk is not the only one-to-many IMS application that can be supported by the above solution.

Mobility Consideration

During the whole service period, the user equipment may move around, i.e. the location of the user equipment changes. The following mechanism is defined to guarantee that in Scenario 1 the user equipment can also receive the service data during movement.

For the first manner in Step S102 in Fig. 3, i.e. the User Feedback Based Manner, the following three steps need to be performed:

Step 1: the user equipment receiving the IMS service via the MBMS bearer will re-initiate the SIP procedure during movement and report the CGI of the serving cell thereof to the IMS CN;

Step 2: in response to receipt of the updating of the CGI of a cell from the IMS group, IMS CN will forward the updated CGI of the cell to the BM-SC;

Step 3: BM-SC converts the received cell CGI list into an SA, and detect whether to modify the SA of the MBMS bearer which has been set up. If a modification is needed, the BM-SC performs MBMS Session Update procedure to indicate the modified SA to the MBMS gateway. Thereafter, a new eNB will join the transport IP multicast bearer while the original eNB will leave the setup IP multicast bearer.

For the second manner in Step S102 in Fig. 3, i.e. the Network database Query Based Manner, the following three steps need to be performed:

Step 1: When IMS CN firstly queries the HSS about the location information of the multicast group members, the HSS marks the multicast group members in the database. Once the HSS finds that the location information of theses users changes, it will voluntarily notify IMS CN of the latest location information. Alternatively, the IMS CN can periodically query the HSS about the location information of the multicast group members.

Step 2: The IMS CN forwards the latest location information to the BM-SC.

Step 3: The BM-SC converts the received location information into SA and detect whether to modify the SA where the MBMS bearer has been set up. If a modification is needed, the BM-SC performs MBMS Session Update procedure to indicate the modified SA to the MBMS gateway. Thereafter, a new eNB will join the transport IP multicast bearer while the original eNB will leave the setup IP multicast bearer.

In Scenario 2, the mobility will not impact the whole solution. However, the security centre can determine to change the dedicated SA, and then the changed SA needs to be forwarded to the BM-SC, and then the BM-SC performs the above Step 3 to perform the Session Update procedure.

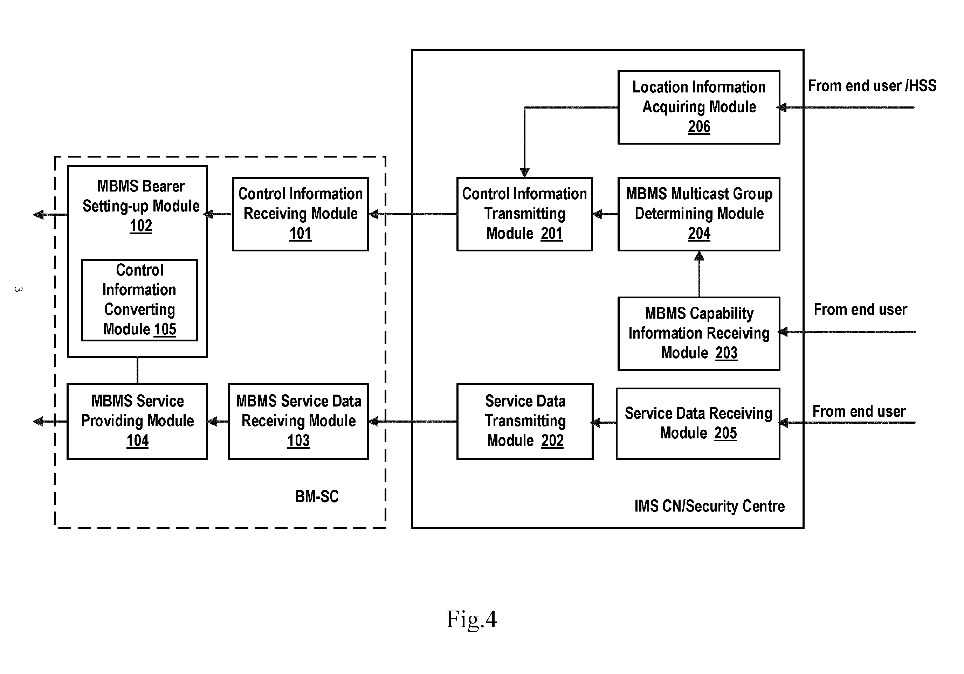

FIG 4 illustrates a structure diagram of an apparatus for providing a multicast service in a communication system according to embodiments of the present invention.

As shown in Fig. 4, in order to achieve Improvement 2, the communication system comprises: an MBMS multicast group determining module 204 configured to determine user equipments included in an MBMS multicast group to provide the multicast group; a control information Transmitting module 201 configured to transmit to the BM-SC the MBMS service control information required to provide an MBMS service to user equipments within the MBMS multicast group. For Scenario 1, the MBMS service control information includes an IP multicast address, a CGI of serving cells or a Service Area Identity (SAI) and an IMS session ID. For Scenario 2, the control information transmitted by the security centre is a dedicated service area list, a security session ID and an IP multicast address.

The BM-SC comprises a control information receiving module 101 configured to receive from the communication system the MBMS service control information required to provide the MBMS service to user equipments within the MBMS multicast group; and an MBMS bearer setting-up module 102 configured to determine a service area in accordance with the received MBMS service control information, and to trigger the MBMS bearer setup procedure for user equipments within the MBMS multicast group in the service area.

For Scenario 1, the MBMS service control information includes an IP multicast group address, a CGI of a serving cell or a Service Area Identity (SAI) and an IMS session ID. In this case, the MBMS bearer setting-up module 102 further comprises a control information converting module 105 configured to convert the received cell CGI list or Service Area Identity (SAI) into a serving cell list so that the MBMS bearer setting-up module 102 could determine a service area.

In order to achieve Improvement 1, the communication system comprises a service data transmitting module 202 configured to transmit to the BM-SC data for the service to be provided. The communication system may also comprise a service data receiving module 205 configured to receive service data from a user equipment to provide service data to the service data transmitting module 202.

Correspondingly, the BM-SC comprises an MBMS service data receiving module 103 configured to receive from the communication system data for the service to be provided; an MBMS service providing module 104 configured to distribute data to each user equipment within the MBMS multicast group via the setup MBMS bearer so as to provide the MBMS service to user equipments within the MBMS multicast group.

For Scenario 1, IMS-CN further includes an MBMS capability information receiving module 203 configured to receive from multiple user equipments the information related to the MBMS capability of the user equipments so that the MBMS multicast group determining module 204 can determine the MBMS multicast group includes all user equipments having the MBMS capability; and a location information acquiring module 206 configured to acquire the location information of the multicast group members by receiving from HSS the location information of the multicast group members in the communication system, or by receiving from the multicast group members the feedback location information. The location information acquiring module 206 may receive from HSS the location information of the multicast group members by the following manner that: the location information acquiring module 206 periodically queries the HSS, or the HSS tracks each multicast group member and transmits the changed location information to the location information acquiring module 206 when the location information changes.

When the control information receiving module 101 receives the updated MBMS service control information, the MBMS bearer setting-up module 102 re-determines a service area and triggers the MBMS bearer setup procedure in accordance with the updated MBMS service control information.

When the control information receiving module 101 receives a service termination indicator, the MBMS service providing module 104 stops the service and the MBMS bearer setting-up module 102 eliminates the set up MBMS bearer to thereby release the resources for the MBMS service.

In the following, the method for providing downlink multicast services to an IMS system using the e-MBMS bearer according to the first embodiment of the present invention will be further described in detail.

[The First Embodiment]

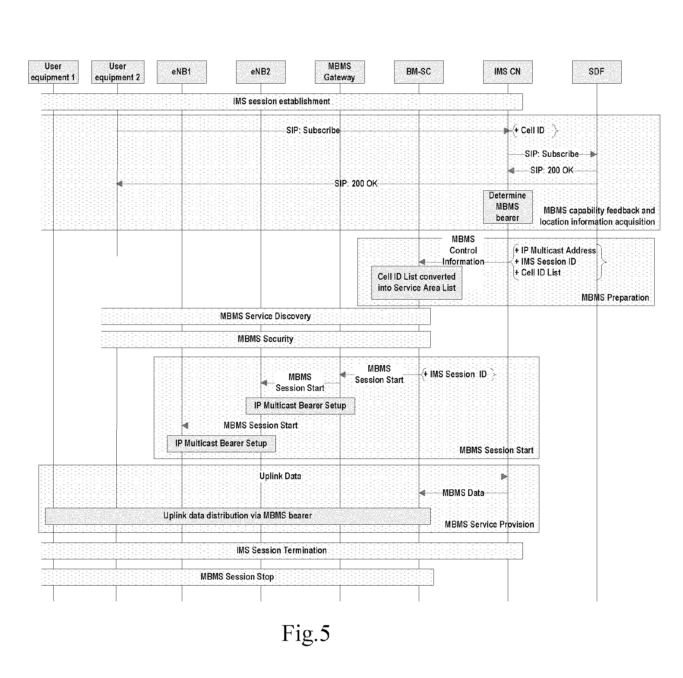

FIG 5 illustrates a signal flow diagram of a method for providing a downlink multicast service to an IMS system in an LTE MBMS system according to the first embodiment of the present invention. For simplicity, Fig. 5 only shows the party initiating the session (user equipment 1) and one of the invited friends (user equipment 2). User equipments 1 and 2 are controlled by eNB1 and eNB2 respectively.

In the application session establishment step, one-to-many IMS service is initiated by user equipment 1, e.g. one push-to-talk session is set up between multiple friends as defined in existing specifications.

In the multicast group determining step, user equipment 2 accepts the session and feeds back its MBMS capability to the IMS CN. The party initiating the session (i.e. user equipment 1) also does such feedback. Considering that not all the IMS user equipments have the MBMS capability in an actual system, for the user equipments without the MBMS capability, the IMS CN allocates unicast resources. Then, the "multicast group" includes all IMS user equipments having the MBMS capability and having already accepted the IMS session.

In the location information acquisition step, user equipment 2 feeds back the CGI identity of its serving cell to the IMS CN. User equipment 1 also feeds back the CGI of its serving cell to the IMS CN.

In the MBMS preparation step, based on the feedback from user equipments, the IMS CN organizes control information for the BM-SC including an allocated IP multicast address for the MBMS User Service, a cell CGI list and an IMS session ID. The cell CGI list may be fed back from the user equipments or obtained from HSS. The IMS CN forwards all information to the BM-SC, and the BM-SC converts Cell IDs into a Service Area (SA) list based on the deployment configuration.

The MBMS service discovery procedure is performed for all the user equipments within the multicast group. This step may be implemented by any existing method.

In addition, the MBMS key distribution procedure is performed between these user equipments and the BM-SC.

In the session start step, BM-SC allocates a corresponding TMGI and combines the TMGI information together with the SA list into the MBMS Session Start message to transmit to the MBMS gateway. The MBMS gateway sends MBMS Session Start message together with the transport IP multicast address to eNBs having cells located in the SA list. The eNB receiving Session Start message sets up an IP multicast transport bearer with the MBMS gateway. The MBMS bearer setup procedure is as same as current REL9 specification.

In the MBMS service provision step, the IMS CN receives uplink IMS data and takes it as the MBMS content. The IMS CN forwards the uplink IMS data to the BM-SC. The BM-SC distributes the received service data to all the MBMS user equipments according to available MBMS specifications.

All the user equipments can terminate the IMS session as they like. If the IMS CN finds that all the user equipments belonging to the "multicast group" terminate the IMS session, it informs the BM-SC at the application session termination step.

By obtainning a service session termination indicator from the IMS CN, the BM-SC triggers the MBMS Session Stop procedure and release all the MBMS resources for the application session.

In the following, the method for providing multicast functions by using the e-MBMS bearer in the dedicated network according to a second embodiment of the present invention will be further described in detail.

[The Second Embodiment]

In this embodiment, the procedure is explained as below.

In the application session establishment step, one authorized user equipment of the dedicated network uploads a video to the security centre and requires sharing the video.

In the multicast group determining step, the security centre determines the dedicated network type and the dedicated SA scope for video sharing. Then, the "multicast group" is determined as comprising all the user equipments of the dedicated network which are of the determined type and located in the dedicated SA scope.

In the MBMS preparation step, the security centre conveys control information including the dedicated SA and a security session ID to the BM-SC. In addition, the security centre further allocates the IP multicast address for the MBMS User Service and sends it to the BM-SC.

The service discovery procedure is performed for all the dedicated network user equipments within the multicast group. Any available method can be used to perform this procedure.

In addition, the MBMS key distribution procedure is also performed between these user equipments and the BM-SC. As described above, the service discovery procedure and the MBMS key distribution procedure can be omitted in specific circumstances.

In the session start step, the BM-SC allocates corresponding TMGI and triggers the MBMS Session Start procedure. The BM-SC includes the received SA list into the Session Start message and sends it to the MBMS gateway. The MBMS gateway sends MBMS Session Start message together with the transport IP multicast address to all eNBs having cells located in the SA. The eNB which has received the Session Start message sets up an IP multicast transport bearer with the MBMS gateway. The MBMS bearer setup procedure is as same as current REL9 specification.

In the MBMS service provision procedure, the BM-SC distributes the received service data to all the MBMS user equipments according to available MBMS specifications.

The security centre determines to stop all sessions and forwards this status to BM-SC.

When receiving the service session termination indicator from the IMS CN, the BM-SC triggers the MBMS Session Stop procedure and releases all the MBMS resources for the application session.

Beneficial effects achieved by the present invention

The present invention makes multicast within the MBMS multicast group possible in case that the multicast is not supported in the radio network. Especially, it provides a system architecture and mechanism to meet requirements on application scenarios from operators.

Two key problems of the technical solution are solved. One is to introduce uplink user data as a multicast source, and the other is to distribute contents within "a multicast group".

For the first improvement, an interface between the IMS CN and the BM-SC is used for the IMS-based multicast service. From the user plane point of view, the IMS CN acts as the content source for LTE MBMS. For video sharing, the security centre acts as the content source for LTE MBMS.

For the second improvement, the IMS-based multicast service is conveyed within a dynamic group. The "multicast group" includes all IMS user equipments having the MBMS capability and having already accepted IMS session. The multicast group information is obtained based on feedbacks from the user equipments. The video sharing scenario indicates that the "multicast group" is semi-configured by the network element controlling the whole application session.

Specifically, IMS user equipments send a CGI list of their serving cells to the IMS CN when they accept the IMS session invitation.

The interface between the MBMS content source and the BM-SC is used to convey MBMS control information in the control plane. The IMS CN forwards the cell CGI list to the BM-SC. The BM-SC converts the information into an SA list. For the video sharing scenario, the security centre directly transmits the SA list to the BM-SC. Thus, the user equipments located outside the SA will not receive any MBMS information.

The present invention also introduces the proper trigger time for the MBMS service discovery procedure and the MBMS security procedure, i.e. after the BM-SC obtains the IP multicast address. The two procedures make only user equipments within the multicast group can decode the service data in the control plane and user plane respectively.

Mobility is also considered for the IMS-based MBMS to make sure that the content can always reach the multicast group members even though they move in the system. User equipments within the group will report the latest CGI of serving cells when they detect the change of the serving cells. By the same method mentioned above, the BM-SC may convert the new CGI of serving cells into a new SA ID. As such, the MBM Session Update procedure will be triggered.

It is easy for those skilled in the art to recognize that different steps of the above method can be implemented by a programmable computer. Here, some implementation modes also include a machine-readable or computer-readable program storage device (e.g. a digital data storage medium) and a machine-executable or computer-executable coded program instruction, wherein the instruction executes some or all steps of the above method. For example, the program storage device may be a digital memory, a magnetic storage medium (e.g. a disk and a tape), hardware or an optical readable digital data storage medium. The implementation modes further include a programmable computer executing the steps of the above method.

The descriptions and drawings only illustrate the principle of the present invention. Thus, it should be recognized that those skilled in the art can suggest different structures. Although the different structures are not definitely described or shown here, they reflect the principle of the present invention and are included in the spirit and scope of the present invention. In addition, all examples mentioned here are mainly used only for teaching purposes to help a reader to understand the principle of the present invention and the conception contributed by the inventor for improvement in the art, and should not be construed as restrictions of the specifically mentioned examples and conditions. In addition, all of the statements and the specific examples thereof mentioning the principles, aspects and implementation modes of the present invention include the equivalents thereof.

Embodiments described above are only used for exemplary purposes, not to limit the scope of the present invention. It should be understood by those skilled in the art that various modifications and changes in terms of form and detail can be carried out on these embodiments without departure from the scope and spirit of the present invention. The scope of the present invention is defined by the appended claims and their equivalents.

## Claims

1. A method for providing a multicast service in a communication system, the communication system including at least one user equipment and a server for providing a service to the at least one user equipment, the method comprising steps of:
determining, by the server, a Multimedia Broadcast Multicast Service MBMS multicast group to provide a multicast service;
transmitting, by the server, MBMS service control information required to provide an MBMS service to user equipments within the MBMS multicast group, to a Broadcast Multicast Service Centre BM-SC in an evolved Multimedia Broadcast Multicast Service e-MBMS network;
determining, by the BM-SC, an MBMS service area and triggering in the MBMS service area an MBMS bearer setup procedure for user equipments within the MBMS multicast group, based on the received MBMS service control information;
forwarding, by the server, data to provide a service to the BM-SC; and
distributing, by the BM-SC, the data to each of the user equipments within the MBMS multicast group, via the set up MBMS bearer.

2. The method according to claim 1, wherein after the BM-SC receives the MBMS service control information from the server, the user equipments within the MBMS multicast group or the e-MBMS network trigger an MBMS discovery procedure for all of the user equipments within the multicast group, and trigger an MBMS key distribution procedure between all of the user equipments within the multicast group and the BM-SC.

3. The method according to claim 1, before the step of determining, by the server, a Multimedia Broadcast Multicast Service MBMS multicast group to provide a multicast service, further comprising a step of:
setting up a bearer for the service between the at least one user equipment and the server.

4. The method according to claim 3, after setting up a bearer for the service between the at least one user equipment and the server, further comprising a step of:
feeding back, by the at least one user equipment, the information related to MBMS capability of the at least one user equipment to the server via the bearer,
wherein the server determines that the MBMS multicast group includes all user equipments having the MBMS capability.

5. The method according to claim 4, wherein for the user equipments without the MBMS capability, the server transmits to them data for the service to be provided, via the bearer.

6. The method according to claim 1, wherein the received MBMS service control information includes location information of each of the user equipments within the MBMS multicast group, and the BM-SC converts the received location information to determine the MBMS service area.

7. The method according to claim 6, wherein the location information is fed back to the server by each of the user equipments within the MBMS multicast group, or is obtained by accessing a server storing the location information of each of the user equipments.

8. The method according to claim 7, wherein after the location information is changed, further comprising steps of:
forwarding, by the server, updated MBMS service control information to the BM-SC; and
re-determining, by the BM-SC, the MBMS service area and triggering an MBMS bearer setup procedure, based on the updated MBMS service control information.

9. The method according to one of claims 1-8, further comprising steps of:
transmitting, by the server, a service termination indicator to the BM-SC; and
stopping, by the BM-SC, the service and releasing the set up MBMS bearer.

10. The method according to one of claims 2-8, wherein the data to provide a service is received by the server from a user equipment of the at least one user equipment via the bearer.

11. The method according to one of claims 1-8, wherein the communication system is one of an IP Multimedia Subsystem IMS system and a dedicated network.

12. A Broadcast Multicast Service Centre BM-SC, comprising:
a control information receiving module configured to receive, from a server, MBMS service control information required to provide an MBMS service to user equipments within a Multimedia Broadcast Multicast Service MBMS multicast group;
an MBMS bearer setting-up module configured to determine an MBMS service area, and to trigger in the MBMS service area an MBMS bearer setup procedure for user equipments within the MBMS multicast group, based on the received MBMS service control information;
an MBMS service data receiving module configured to receive from a server data for the service to be provided; and
an MBMS service providing module configured to distribute data to user equipments within the MBMS multicast group via the set up MBMS bearer.

13. The BM-SC according to claim 12, wherein the MBMS service control information received by the control information receiving module from the server comprises: location information of the user equipments within the MBMS multicast group, and the MBMS bearer setting-up module comprises: a control information converting module configured to convert the location information to determine the MBMS service area.

14. The BM-SC according to claim 12, wherein when the control information receiving module receives updated MBMS service control information, the MBMS bearer setting-up module re-determines the MBMS service area and triggers the MBMS bearer setup procedure based on the updated MBMS service control information.

15. The BM-SC according to one of claims 12-14, wherein
when the control information receiving module receives a service termination indicator, the MBMS service providing module stops the service and the MBMS bearer setting-up module releases the set up MBMS bearer.

16. A server, comprising:
an MBMS multicast group determining module configured to determine an MBMS multicast group;
a control information transmitting module configured to transmit MBMS service control information required to provide an MBMS service to user equipments within a Multimedia Broadcast Multicast Service MBMS multicast group, to a Broadcast Multicast Service Centre BM-SC in an evolved Multimedia Broadcast Multicast Service e-MBMS network; and
a service data transmitting module configured to transmit to the BM-SC data for the service to be provided.

17. The server according to claim 16, further comprising:
an MBMS capability information receiving module configured to receive, from an user equipment within the MBMS multicast group, information related to MBMS capability of the user equipment; and
wherein the MBMS multicast group determining module determines that the MBMS multicast group comprises all user equipments having the MBMS capability.

18. The server according to claim 16, wherein the MBMS service control information comprises location information of the user equipments within the MBMS multicast group; and the location information is fed back by user equipments within the MBMS multicast group to the apparatus, or is obtained by accessing a server storing the location information of user equipments.

19. The server according to claim 18, wherein when the location information is changed, the control information transmitting module transmits updated MBMS service control information to the BM-SC.
